# EUROPEAN PATENT SPECIFICATION

(11) **EP 0 697 517 B1**
(45) Date of publication and mention of the grant of the patent: **12.08.1998**
(21) Application number: 94112787.0
(22) Date of filing: 16.08.1994
(51) Int. Cl.: F02M 35/02, F16B 2/24

(54) **Clamping mechanism**
Klemmechanismus
Mécanisme de serrage

(43) Date of publication of application: 21.02.1996
(73) Proprietor: Toyo Roki Seizo Kabushikikaisha, Hamakita-shi, Shizuoka-ken (JP)
(72) Inventor: Onoda, Tadayuki, Iwata-shi, Shizuoka-ken (JP); Ota, Hiromi, Hamakita-shi, Shizuoka-ken (JP)
(74) Representative: KUHNEN, WACKER & PARTNER

(56) References cited:
- EP-A- 0 209 086
- DE-A- 2 412 051
- JP-U-57 042 157

## Description

This invention relates to a clamping mechanism and a cap according to the preamble of claim 1, and more particularly to a clamping mechanism for securing an air cleaner cap onto an air cleaner case of a vehicle.

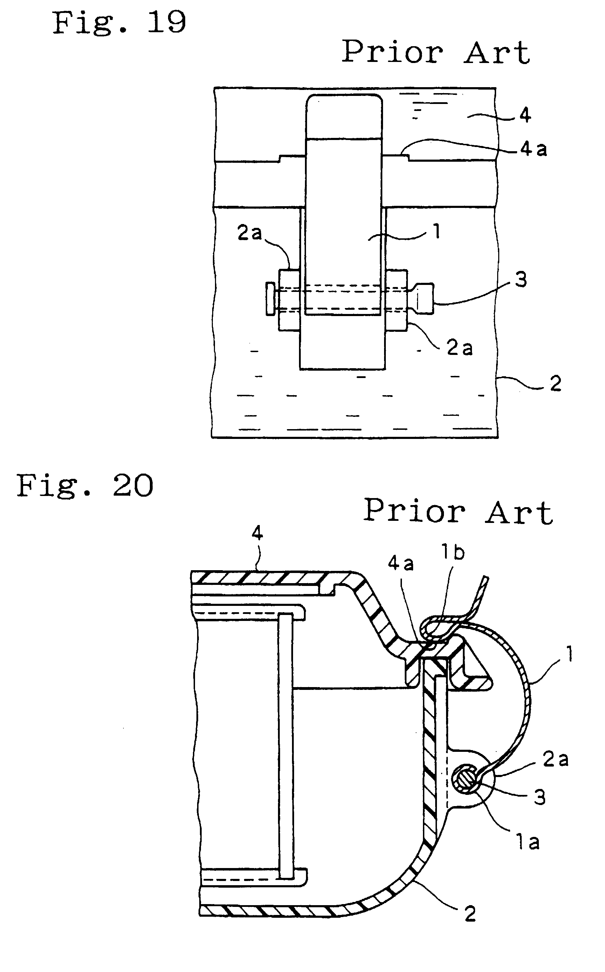

As one of known clamping mechanisms of this kind, one is disclosed in a Japanese Unexamined Utility Model Publication, or Jikkai Sho 57-42157. The clamping mechanism disclosed in the same publication is shown in FIGs. 19 and 20.

A clamp piece (1) shown in the same publication is formed in a generally C shape cross section with one end cylindrically curled to be a turning end (1a). A pair of protuberances (2a) are formed on a side of an air cleaner case (2) to support a pivot shaft (3). The pivot shaft (3) passes through the turning end (1a) of the clamp piece (1) to support the clamp piece (1) for turning. The upper opening of the air cleaner case (2) is covered with an air cleaner cap (4). A depression seat (4a) is formed on a location. on the top surface near the brim of the air cleaner cap (4), corresponding to the location where the clamp piece (1) is arranged so that the depression seat (4a) is depressed by a clamp end (1b) at the other end of the clamp piece (1) when the clamp piece (1) is turned toward the air cleaner cap (4).

To assemble the mechanism, while holding the turning end (1a) of the clamp piece (1) between the protuberances (2a), the pivot shaft (3) is inserted from outside one of the protuberances (2a) through the protuberances (2a) and the turning end (1a), and the ends of the pivot shaft (3) are caulked.

To use the mechanism, the air cleaner cap (4) is placed over the opening of the air cleaner case (2), and the clamp piece (1) is turned and pushed toward the air cleaner cap (4). Then the clamp end (1b) rides on the depression seat (4a) to depress and secure the air cleaner cap (4) toward the air cleaner (2).

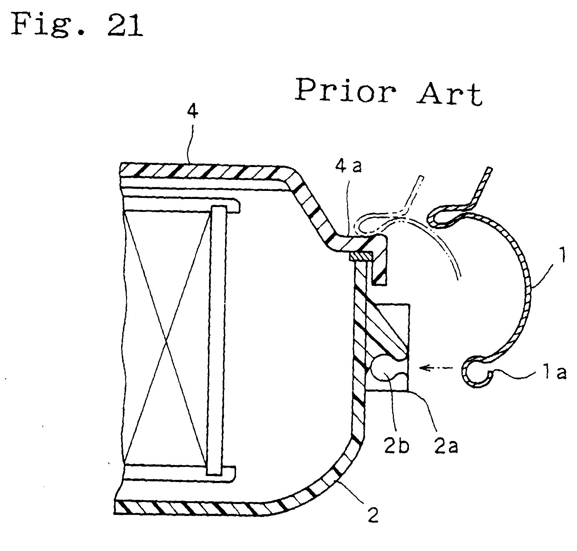

Another conventional mechanism disclosed in Jikkai Sho 59-84257, as shown in FIG. 21, does not employ a pivot shaft but employs a holding portion (2b) of a C shape as seen from the side so that the curled turning end (1a) of the clamp piece (1) is pressed and fit into the holding portion.

The conventional clamp mechanisms described above have the following problems:

In the former clamping mechanism, the pivot shaft has to be inserted through the turning end while holding the clamp piece and there fore the assembly work is not easy. Furthermore, the clamp piece is likely to turn and enter the inside of the air cleaner case when the air cleaner cap is not placed on the air cleaner case. Therefore, each clamp piece has to be turned and brought outside the air cleaner case at the time of attaching the air cleaner cap.

In the latter clamping mechanism on the other hand, the clamp attachment work requires considerable manual force to press and fit the clamp piece into the holding portion. This poses a considerable burden on a worker when a large number of units are to be assembled.

An obiect of this invention is to provide a clamping mechanism capable of being assembled without requiring a great manual force and preventing a clamp piece from entering the inside of a main body (of an air cleaner case) when a can is taken off.

This object will be solved by a clamping mechanism and a cap having the characterizing features of claim 1.

In this way, the turning end of the clamp piece is formed in a U shape by curling a C-shaped end inward. The pivot shaft is inserted into the U-shaped opening with the turning end placed along the main body while bringing the clamp end into the main body. Turn restricting piece permits the clamp end to turn away from the main body but restricts the turn in the opposite direction beyond a minimum angle necessary for depressing the cap. Therefore, the clamp piece cannot enter the main body. Since the pivot shaft is located close to the main body, the turning end cannot come off the pivot shaft under the condition of the turning end in engagement with the pivot shaft and turning.

Thus, a clamping mechanism is provided which facilitates assembly and prevents a clamp piece from entering the main body.

Another object of this invention is to prevent the clamp piece from opening unnecessarily.

To accomplish the above objects, this invention is constituted that in the clamping mechanism described in claim 1, the U-shaped turning end is provided with a cutout, and a projection for fitting in the cutout and stopping the turning angle is formed on the circumferential surface of the pivot shaft.

In this way, the projection formed on the circumferential surface of the pivot shaft enters the cutout formed in the turning end which serves as a pivot at the time of turning, and the range within which the projection can turn in the cutout can be adjusted.

Thus, the turning range of the clamp piece is easily restricted, and ease of assembly work is improved if, for instance, the clamp is arranged not to open unnecessarily.
FIG. 1 an external front view of a clamping mechanism as an embodiment of this invention;
FIG. 2 is a vertical cross-sectional view in engaged state taken along the line II-II in FIG. 1;
FIG. 3 is a perspective view of a clamp piece;
FIG. 4 is a side view of the clamp piece;
FIG. 5 is a front view of the clamp piece;
FIG. 6 is a plan view of a clamp support portion;
FIG. 7 is a cross-sectional view of the clamp support portion taken along the line VII-VII in FIG. 6;
FIG. 8 is a front view of the clamp support portion;
FIG. 9 is a perspective view of the clamp support portion;
FIG. 10 is a perspective view showing the state of the clamp piece being assembled to the clamp support portion;
FIG. 11 is a cross-sectional view showing the state of the clamp piece being assembled to the clamp support portion;
FIG. 12 is a perspective view showing the state of the clamp piece being assembled to the clamp support portion;
FIG. 13 is a cross-sectional view showing the state of the clamp piece being assembled to the clamp support portion;
FIG. 14 is a cross-sectional view showing the state of the clamp piece being assembled to the clamp support portion;
FIG. 15 is a perspective view showing the state of the clamp piece being assembled to the clamp support portion;
FIG. 16 is a cross-sectional view showing the state of the clamp piece being assembled to the clamp support portion;
FIG. 17 is a perspective view showing the state of the clamp piece being assembled to the clamp support portion;
FIG. 18 is a cross-sectional view showing the state of the clamp piece being assembled to the clamp support portion;
FIG. 19 is a front view of a conventional clamping mechanism;
FIG. 20 is a cross-sectional view of the conventional clamping mechanism; and
FIG. 21 is a cross-sectional view of another conventional clamping mechanism.

Embodiments of this invention will be hereinafter described in reference to the accompanying drawings. In the embodiments, the clamp mechanism is used for clamping a case and a cap of an air cleaner for vehicles.

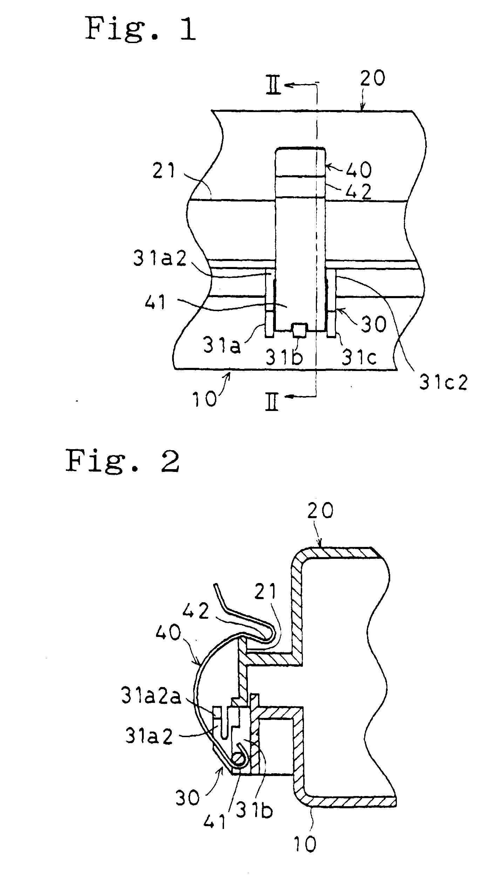

FIG. 1 is an external front view of a clamping mechanism as an embodiment of this invention and FIG. 2 is a vertical cross-sectional view in the state of use.

In those drawings, an air cleaner case (10) is open upward and the brim of the opening is extended horizontally outward and further turned downward so as to form an inverted U cross section in the brim portion. The brim of an air cleaner cap (20) for covering the opening of the air cleaner case (10) is also extended once horizontally outward and then turned downward to form a stepped recess in the brim portion. However, the horizontally outwardly extended portion of the brim is also extended slightly upward from the point where the brim is turned downward to form an engagement wall (21) which will be described later.

A clamp support portion (30) is formed to project outward from the downward turned brim portion of the air cleaner case (10). A clamp piece (40) is secured, at its lower end, to the clamp support portion (30) so as to be capable of turning, with its upper end engaging with the engagement wall (21).

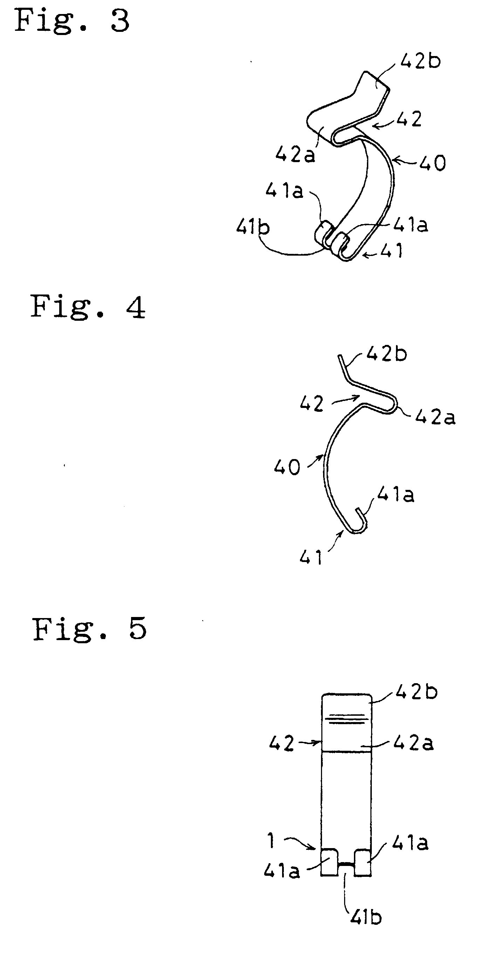

FIG. 3 is a perspective view, FIG. 4 is a side view, and FIG. 5 is a front view, respectively, of the clamp piece (40).

The clamp piece (40) is formed with a band of sheet metal in a generally C shape with its front surface convex and the back surface concave. A turning end (41) at the lower end is bifurcated by a cutout (41b) in the central portion of the sheet metal band. The bifurcated nail portions (41a, 41a) are turned back inward by 180 degrees to form a U shape in cross section. The amount of the cutout (41b) is adjusted as will be described later. A clamp end (42) at the upper end is turned back outward by 180 degrees to form an inward facing curved portion (42a) of the clamp piece (40) and further bent upward to form a lug (42b).

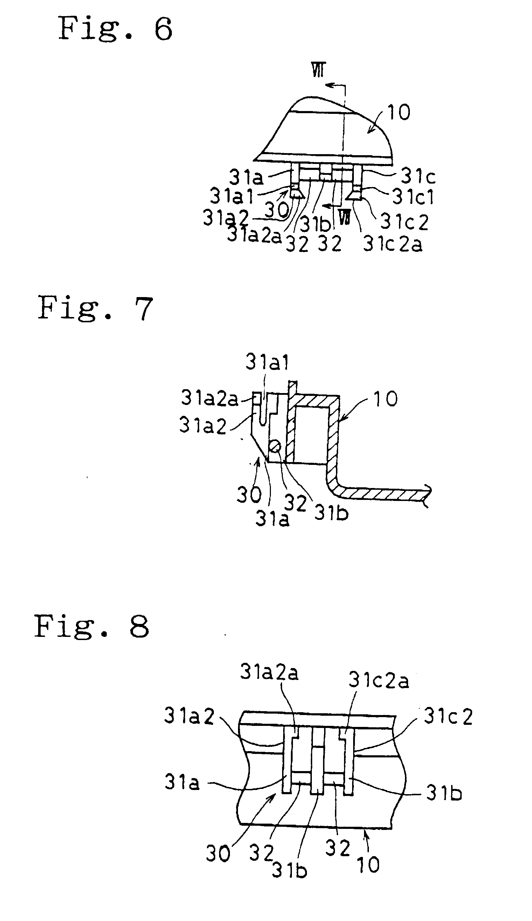

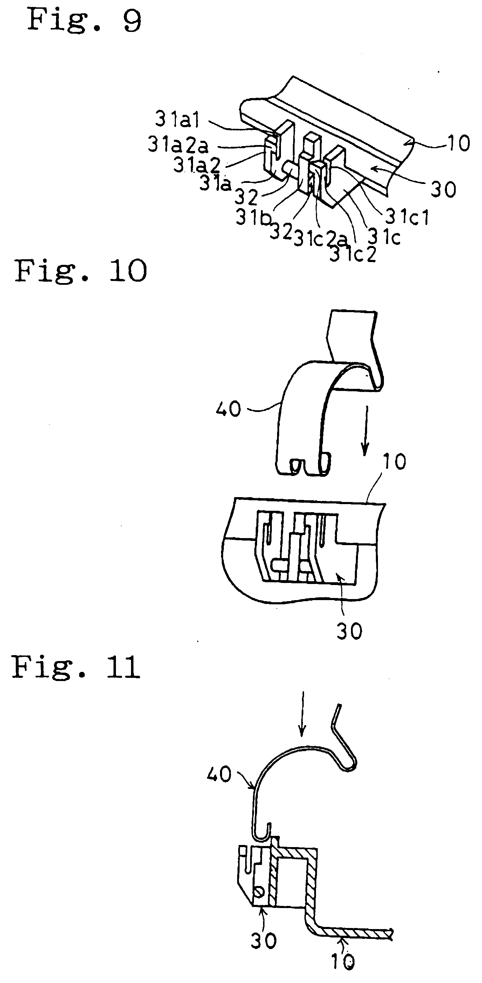

FIG. 6 is a plan view, FIG. 7 is a cross-sectional view, FIG. 8 is a front view, and FIG. 9 is a perspective view, respectively, of a clamp support portion (30).

The clamp support portion (30) is made up of three support ribs (31a, 31b, 31c) projecting outward from the air cleaner case (10). The distance between the ribs (31a) and (31c) on both sides is approximately the same with the width of the clamp piece (40). The distances between the ribs (31a) and (31b), and between the ribs (31b) and (31c) are the same with the width of the nail port ion (41a). The height of the central rib (31b) is lower than that of the outer side ribs (31a) and (31c). Cylindrical pivot shaft members (32, 32) are formed at a lower position between the ribs (31a) and (31b), and between the ribs (31b) and (31c). A gap is provided between the pivot shaft members (32) and the air cleaner case (10) so that the nail portion (41a) can be inserted.

Slots (31a1, 31c1) are formed in the central areas, with respect to the rib height direction, of the outer side ribs (31a, 31c) to extend from the top to the middle of the ribs so that the portions of the ribs (31a, 31c) outside the slots (31a1, 31c1) are made to be arm portions (31a2, 31c2) which can be curved toward the direction of facing each other. Projections (31a2a, 31c2a) are respectively formed at the upper ends of the arm portions (31a2, 31c2). The projections (31a2a, 31c2a) are flat on the sides opposite to the air cleaner case (10), and sloped on the sides facing the air cleaner case so that the sides approach the ribs (31a, 31c) toward the air cleaner case (10).

The functions of this embodiment as described above will be hereinafter described.

To assemble the mechanism, as shown in FIGs. 10 and 11, the turning end (41) is inserted from above into the spaces between the projections (31a2a, 31c2a) of the arm portions (31a2, 31c2) of the clamp support portion (30) and the air cleaner case (10). Here, the nail portions (41a, 41a) are made to enter the spaces between the ribs (31a) and (31b) and between the ribs (31b) and (31c).

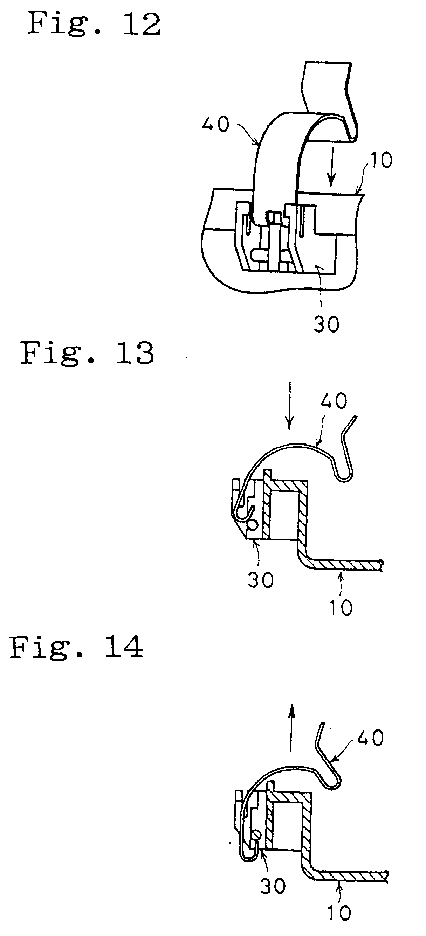

When the turning end (41) is inserted to some extent as shown in FIG. 12, it comes into contact with the pivot shaft members (32). Then the clamp end (42) is turned toward the inside of the air cleaner case (10) as shown in FIG. 13 so that the turning end (41) can negotiate the pivot shaft members (32). When the turning end (41) negotiates the pivot shaft members (32), the clamp end (42) is slightly made upright and lifted as shown in FIG. 14 so that the pivot shaft members (32) fit in the U-shaped portion of the turning end (41).

When the pivot shaft members (32) fit snugly in the U-shaped portion, the turning end (42) is turned in the direction away from the air cleaner case (10). Here, although the sides of the clamp piece (40) come into contact with the projections (31a2a, 31c2a) of the arm portions (31a2, 31c2), since the air cleaner case (10) sides of the projections (31a2a, 31c2a) are sloped as described above, the arm portions (31a2, 31c2) deflect, and the clamp piece (40) negotiates the projections (31a2a, 31c2a). However, when the clamp piece (40) is turned to a certain extent, the central rib (31b) comes into contact with the end of the cutout (41b) and is prevented from turning beyond that extent. Therefore, the range of turning the clamp piece (40) in the direction away from the air cleaner case (10) can be adjusted by changing the sizes of the cutout (41b) and the rib (31b).

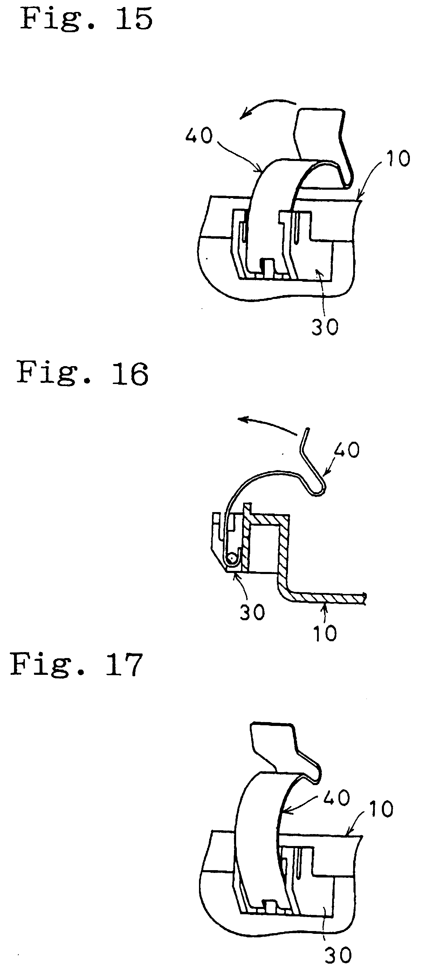

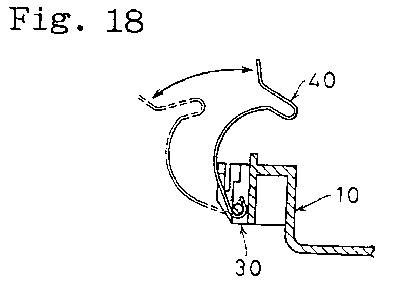

Thus, the assembly is complete. As shown in FIGs. 17 and 18, the turning end (41) of the clamp piece (40) surrounds the pivot shaft members (32) so that the clamp piece (40) is capable of turning within a certain range. However, when the clamp piece (40) is turned toward the air cleaner case (10), the clamp piece (40) comes into contact with the projections (31a2a, 31c2a) of the arm portions (31a2, 31c2) on their sides opposite to the air cleaner case (10). When the turning direction is opposite to the above, the projections (31a2a, 31c2a) are apart from the clamp piece (40). When the contact is made toward the air cleaner case (10), the clamp piece (40) comes into contact with the flat surfaces of the projections (31a2a, 31c2a), and the arm portions (31a2, 31c2) do not deflect but prevent the clamp piece (40) from turning. Therefore, the clamp piece (40) cannot turn to such an extent that the clamp end (42) enters the inside of the air cleaner case (10). In other words, the arm portions (31a2, 31c2) formed with the projections (31a2a, 31c2a) are the very things that constitute the turn restriction arrangement of this embodiment.

Since the U-shaped turning end (41) simply surrounds and engages with the pivot shaft members (32), the engagement would be easily released if the clamp piece (40) were turned to such an extent that it enters the inside of the air cleaner case (10). However, since the clamp piece (40) is prevented from turning by the projections (31a2a, 31c2a), the engagement cannot be released.

When the clamp piece (40) is assembled to the clamp support portion (30) of the air cleaner case (10) as described above, the air cleaner cap (20) is placed over the air cleaner case (10) in a usual manner, and the clamp end (42) of the clamp piece (40) is pressed toward the engagement wall (21). Then the curved portion (42a) of the clamp end (42) negotiates the engagement wall (21) to press and hold the air cleaner cap (20) against the air cleaner case (10).

In this embodiment, the arm portions (31a2, 31c2) and the projections (31a2a, 31c2a) constituting the turn restriction arrangement may also be made separate from the ribs (31a, 31c), or a ratchet mechanism and the like having like functions may be employed. Or, the turn restricting arrangement may also be constituted with arm portions (31a2, 31c2) integrated with the ribs (31a, 31c) which deflect as a whole.

Furthermore, if the rib (31b) is made long. the turning end (41) is prevented from interfering with other components when the turning end (41) is made to engage with the pivot shaft members (32).

## Claims

1. A clamping mechanism and a cap (20) for securing the cap (20) over an opening of a main body (10), comprising a clamp piece (40) formed in a generally C shape cross section, with a turning end (41) at one end of said clamp piece (40) secured for turning relative to a pivot shaft (32) on said main body (10) so that a clamp end (42) at the other end of said clamp piece (40) depresses a depression seat of said cap (20) toward said main body side, and a turn restriction piece (31a2a, 31c2a); characterized in that said pivot shaft (32) is apart from said main body (10) approximately by the thickness of said clamp piece (40), said turning end (41) is curled inside into a U shape, and said turn restricting piece (31a2a, 31c2a) is provided in the vicinity of said pivot shaft (32) so that said clamp end (42) is restricted from turning toward said cap (20) beyond a minimum angle necessary for depressing said cap (20) while permitting said clamp end (42) to turn away from said cap (20).

2. A clamping mechanism and a cap according to claim 1, characterized in that a cutout (41b) is formed in said U-shaped turning end (42), and that a projection (31b) is formed on the circumferential surface of said pivot shaft (32) to fit into said cutout (41b) and restrict the amount of turning.

## Patentansprüche

1. Klemmechanismus und eine Kappe (20), zum Sichern der Kappe (20) über einer Öffnung eines Hauptkörpers (10), mit einem Klemmstück (40), welches mit einem im wesentlichen C-förmigen Querschnitt ausgebildet ist, wobei ein Schwenkende (41) an einem Ende des Klemmstücks (40) zur Relativverschwenkung um eine Drehwelle (32) am Hauptkörper (10) derart festgelegt ist, daß ein Klemmende (42) am anderen Ende des Klemmstücks (40) eine Aufnahmevertiefung der Kappe (20) zur Seite des Hauptkörpers niederdrückt, und mit einem Schwenkbegrenzungsstück (31a2a, 31c2a); dadurch gekennzeichnet, daß die Drehwelle (32) annähernd um die Dicke des Klemmstücks (40) beabstandet vom Hauptkörper (10) vorliegt, wobei das Schwenkende (41) nach innen zu einer U-Form gerollt ist, und wobei das Schwenkbegrenzungsstück (31a2a, 31c2a) derart in der Nachbarschaft der Drehwelle (32) vorgesehen ist, daß das Klemmende (42) an einer Verschwenkung zur Kappe (20) über einen zum Niederdrücken der Kappe (20) erforderlichen minimalen Winkel hinaus begrenzt ist, während das Klemmende (42) weg von der Kappe (20) schwenkbar ist.

2. Klemmechanismus und eine Kappe nach Anspruch 1, dadurch gekennzeichnet, daß eine Aussparung (41b) am U-förmigen Schwenkende (42) ausgebildet ist, und daß ein Vorsprung (31b) an der Umfangfläche der Drehwelle (32) ausgebildet ist, um sich in die Aussparung (41b) einzufügen und das Ausmaß der Verschwenkung zu begrenzen.

## Revendications

1. Un mécanisme de serrage et une chape (20) pour fixer la chape (20) sur une ouverture d'un corps principal (10), comprenant une pièce de serrage (40) formée dans une section transversale généralement en forme de C, avec une extrémité pivotante (41) à une extrémité de ladite pièce de serrage (40) fixée pour tourner par rapport à un boulon d'articulation (32) sur ledit corps principal (10) de manière qu'une extrémité de serrage (42) à l'autre extrémité de ladite pièce de serrage (40) abaisse un siège de dépression de ladite chape (20) vers le côté dudit corps principal, et une pièce de restriction de rotation (31a2a, 31c2a); caractérisés en ce que ledit boulon d'articulation (32) est éloigné dudit corps principal (10) approximativement de l'épaisseur de ladite pièce de serrage (40), ladite extrémité pivotante (41) est enroulée à l'intérieur en forme de U, et ladite pièce de restriction de rotation (31a2a, 31c2a) est prévue à la proximité dudit boulon d'articulation (32) de manière que ladite extrémité de serrage (42) est empêchée de tourner vers ladite chape (20) de plus d'un angle minimum nécessaire pour abaisser ladite chape (20) tandis qu'elle permet à ladite extrémité de serrage (42) de tourner dans la direction opposée à ladite chape (20).

2. Un mécanisme de serrage et une chape selon la revendication 1, caractérisés en ce qu'une découpure (41b) est formée dans ladite extrémité pivotante en forme de U (42), et qu'une projection (31b) est formée sur la surface circonférentielle dudit boulon d'articulation (32) pour s'ajuster dans ladite découpure (41b) et réduire le montant de rotation.
